# EUROPEAN PATENT SPECIFICATION

(11) **EP 1 146 955 B1**
(45) Date of publication and mention of the grant of the patent: **12.01.2005**
(21) Application number: 00975724.6
(22) Date of filing: 15.11.2000
(51) Int. Cl.: B01D 65/02, B01D 65/06, B01D 63/02, B01D 63/04, C02F 3/06

(54) **OVERFLOW PROCESS AND IMMERSED MEMBRANE FILTRATION SYSTEM**
ÜBERLAUFVERFAHREN UND GETAUCHTES MEMBRANFILTRATIONSSYSTEM ZU DESSEN DURCHFÜHRUNG
PROCEDE PAR DEBORDEMENT ET SYSTEME DE FILTRATION A MEMBRANE IMMERGEE

(30) Priority: 18.11.1999 CA 2290053; 18.11.1999 WO PCT/CA99/01113; 17.02.2000 US 505718; 05.05.2000 CA 2308230; 05.05.2000 US 565032
(43) Date of publication of application: 24.10.2001
(73) Proprietor: Zenon Environmental Inc., Oakville, Ontario L6M 4B2 (CA)
(72) Inventor: JANSON, Arnold, Burlington, Ontario L7N 2B2 (CA); ADAMS, Nicholas, Hamilton, Ontario L8S 3X2 (CA); CADERA, Jason, Guelph, Ontario N1L 1K2 (CA); COTE, Pierre, Dundas, Ontario L9H 3M6 (CA); PEDERSEN, Steven, Kristian, Burlington, Ontario L7N 3E2 (CA)
(74) Representative: Overbury, Richard Douglas
(86) International application number: PCT/CA2000/001354
(87) International publication number: WO 2001/036075

(56) References cited:
- EP-A- 1 034 835
- DE-U- 29 620 426
- PATENT ABSTRACTS OF JAPAN vol. 1997, no. 02, 28 February 1997 (1997-02-28) & JP 08 281082 A (KUBOTA CORP), 29 October 1996 (1996-10-29)
- PATENT ABSTRACTS OF JAPAN vol. 1999, no. 04, 30 April 1999 (1999-04-30) & JP 11 000534 A (KURITA WATER IND LTD), 6 January 1999 (1999-01-06)
- PATENT ABSTRACTS OF JAPAN vol. 1997, no. 06, 30 June 1997 (1997-06-30) & JP 09 047762 A (TOTO LTD), 18 February 1997 (1997-02-18)
- PATENT ABSTRACTS OF JAPAN vol. 1997, no. 12, 25 December 1997 (1997-12-25) & JP 09 220569 A (KUBOTA CORP), 26 August 1997 (1997-08-26)

## Description

### FIELD OF THE INVENTION

This invention relates to a filtration system using immersed suction driven filtering membranes to filter water, for example, to filter surface water to produce potable water, and to a method of operating such a system.

### BACKGROUND OF THE INVENTION

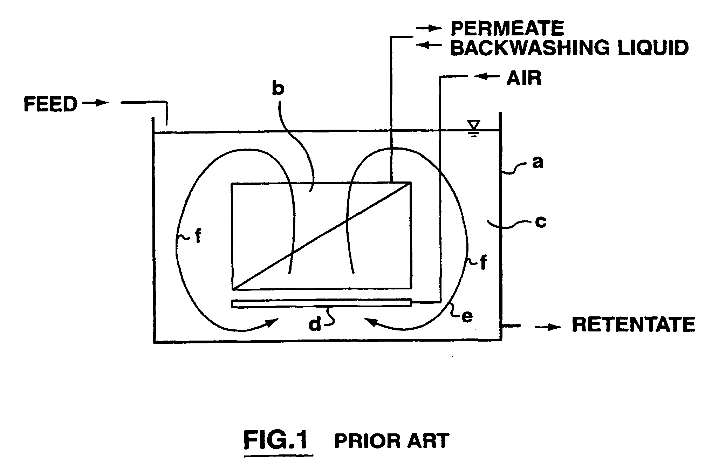

A prior art immersed membrane water filtration system is shown in Figure 1. An open tank (a) holds a membrane module (b) immersed in tank water (c). Feed water to be filtered flows into the tank, typically continuously. Suction on an inner surface of the membranes in the membrane module (b) draws filtered permeate through the membrane wall. Solids are rejected by the membranes and accumulate in the tank water (c). Solids rich retentate is continuously or periodically drained from the tank.

The membrane module (b) is cleaned in part by backwashing and aeration. In backwashing, a backwashing liquid (typically permeate or permeate with a chemical additive) is pumped into the inner spaces of the membranes and flows into the tank water (c). In aeration, air bubbles are created at an aerator (d) mounted below the membrane module (c). The air bubbles agitate and scour the membranes and create an air lift effect. The air lift effect moves tank water (c) in a recirculation pattern (e) upwards through the membrane module (b) and in a downcomer (f) through spaces between the perimeter of the module (b) and the sides of the tank (a). The tank water (c) flowing in the recirculation pattern (e) further physically cleans the membranes and disperses solids rich water from near the membrane module (b).

Document DE-29620426-U discloses a separation process comprising the filtration of water through immersed horizontal distributed hollow fiber modules in a tank with internal water recirculation pattern by means of areation and distribution of feed flow from below the modules and periodical backflush with permeate. Sludge is withdrawn from the bottom of the tank.

Document EP-1 034835-A discloses a membrane bioreactor device with a feed line, immersed membrane modules in a tank, a permeate backflush cycle and areator below the modules. Further a sludge discharge is located above the moduls to adjust the sludge concentration in the tank.

Document JP-09220569 discloses a filtration device with a feed line, immersed membrane modules in a tank, an air backflush cycle and areator below the modules. A sludge discharge is located above the moduls.

### SUMMARY OF THE INVENTION

It is an object of the present invention to improve on the prior art. This object is met by the combination of features, steps or both found in the independant claims, the dependent claims disclosing further advantageous embodiments of the invention.

In various aspects of the invention, a filtration system having immersed suction driven filtering membranes is used to filter water containing low concentrations of suspended solids, for example, to filter surface water to produce potable water. A process is provided for operating such a system.

Membrane modules are arranged in a tank open to the atmosphere and fill most of its horizontal cross sectional area. An upper portion of the tank encloses a volume directly above the modules. This upper portion of the tank is provided with a retentate outlet from the tank. Tank water that is not withdrawn as permeate flows out of the tank through the retentate outlet.

Permeate is withdrawn by suction on an inner surface of the membranes, preferably at a flux between 10 and 60 L/m²/h, more preferably between 20 and 40 L/m²/h. Feed water is added to the tank at a rate that substantially equals the rate at which permeate is withdrawn. Thus during permeation little if any tank water flows out of the outlet and the level of the tank water remains above the membranes.

Permeation is stopped periodically for a deconcentration step. During the deconcentration step the membranes are backwashed, feed flow is provided from below the modules or both. Tank water rises through the modules, the water level in the tank rises and tank water containing solids (then called retentate) flows out of the retentate outlet to deconcentrate the tank water. Aeration with scouring bubbles is provided during the deconcentration step.

### BRIEF DESCRIPTION OF THE DRAWINGS

Figure 1 is a schematic representation of a prior art filtration system.
Figure 2 is a schematic representation of a filtering reactor made in accordance with a preferred embodiment of the present invention.
Figure 3 is a plan view of a filtering reactor made in accordance with a preferred embodiment of the present invention.

### DETAILED DESCRIPTION OF EMBODIMENTS

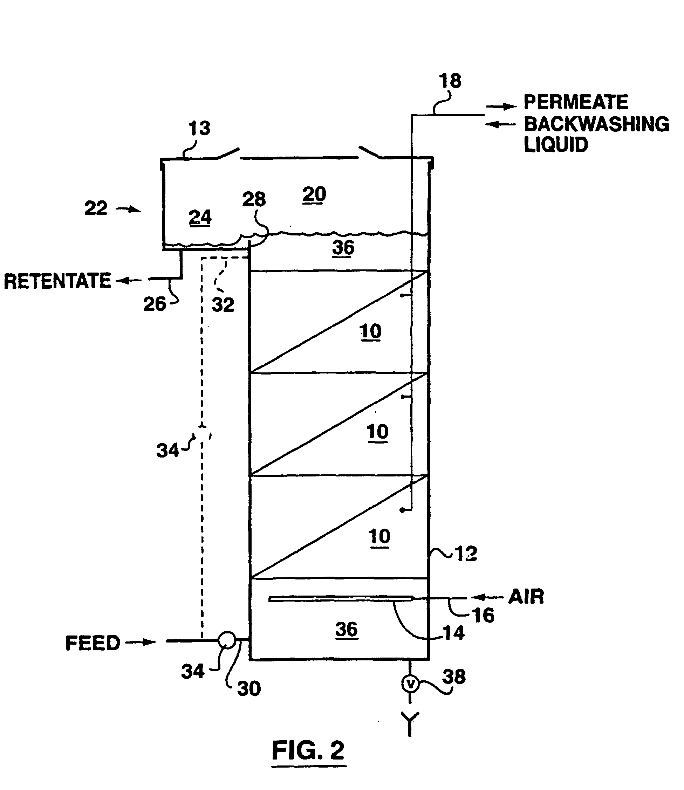

Referring to Figure 2, three membrane modules 10 are stacked on top of each other in a tank 12. The tank 12 is open to the atmosphere although it may be covered with a vented lid 13. The membrane modules 10 may contain flat sheet or hollow fibre membranes with pore sizes in the microfiltration or ultrafiltration range, preferably between 0.003 and 10 microns and more preferably between 0.01 and 1.0 microns. An inner surface of the membranes is connected to one or more headers. An aerator 14 is mounted below the membrane modules 10. The aerator 14 is connected to an air supply pipe 14 in turn connected to a supply of air, nitrogen or other suitable gas. The membrane modules 10 include, within their horizontal cross-sectional area, channels for water and air bubbles to flow vertically through the membrane modules 10 to agitate or scour the membranes. When membrane modules 10 are stacked on top of each other, they are aligned such that water can flow vertically through the stack.

Preferably, the membrane modules 10 contain hollow fibre membranes oriented horizontally and mounted in a slightly slackened state between pairs of horizontally spaced, vertically extending headers. One example is formed of several elements placed side-by-side, each element having a large number of fibres of between 0.2 and 1.0 mm outside diameter and between 0.2 m and 1.0 m in length (the shorter length used for the smaller diameter fibres and the longer length used for larger diameter fibres) potted at either end in a header but with permeate withdrawn from only one header. The elements may be separated by impervious vertical plates. Such modules can provide 500 to 1500 m² of membrane surface area for each m² of horizontal cross-sectional area of a large municipal or commercial tank and there is minimal channeling or dead zones when tank water flows through the modules.

The membrane modules 10 are sized and positioned to fill most of the horizontal cross-sectional area of the tank 12 leaving room only for necessary fittings and other apparatus and maintenance or set-up procedures. Space is not provided for downcomers outside the perimeter of the modules 10 and baffles are provided if necessary to block flow through any space left for fittings etc. or otherwise outside the perimeter of the membrane modules 10. Preferably more than 90%, more preferably substantially all, of the horizontal cross-sectional area of the tank 12 is filled with membrane modules 10.

A permeate pipe 18 connects the headers of the membrane modules 10 to means for permeating by suction on the inner surfaces of the membranes and backwashing means. Such means are known in the art and allow the permeate pipe 18 to be used to either withdraw permeate from the tank 12 or to flow a backwashing liquid (typically permeate or permeate mixed with a chemical) in a reverse direction through the membranes and into the tank 12 in which the backwashing liquid becomes part of tank water 36.

An upper portion 20 of the tank 12 is provided with a retentate outlet 22 having an overflow area 24 connected to a drain pipe 26 to remove retentate from the tank 12. Retentate outlet 22 preferably incorporates an overflow or weir 28 which helps foam produced by aeration (otherwise a cleanliness, safety or volatile chemical release problem) to flow into the overflow area 24. The retentate outlet 22 preferably also has sufficient capacity to release expected flows of retentate quickly to reduce the required free board of the tank 12.

Feed water enters the tank 12 through a first inlet 30 or a second inlet 32 as determined by feed valves 34. Once in the tank 12, feed water may be called tank water 36 which flows generally upwards or downwards through the membrane modules 10.

A filtration cycle has a permeation step followed by a deconcentration step and is repeated many times between more intensive maintenance or recovery cleaning procedures. The permeation step typically lasts for about 15 to 60 minutes, preferably 20 to 40 minutes and is carried out in the absence of aeration. Permeate flux is preferably between 10 and 60 L/m²/h, more preferably between 20 and 40 L/m²/h, wherein the surface area of hollow fibre membranes is based on the outside diameter of the membranes.

During permeation, feed water is added to the tank 12 from one of the inlets 30, 32 at substantially the rate at which permeate is withdrawn. Tank water 36 flows through the membrane modules 10 to generally replace permeate as it is withdrawn from the tank 12. Thus during permeation little if any tank water 36 flows out of the retentate outlet 22 and the level of the tank water 36 remains above the membranes. If the membrane module 10 acts to some extent like a media filter (as will some membrane modules 10 of tightly packed horizontally oriented hollow fibre membranes), feed preferably enters the tank 12 through the second inlet 32. In this way, solids in some feed waters are preferentially deposited in the upper membrane module 10, closer to the retentate outlet 22 and where the upward velocity of the tank water 36 during a deconcentration step will be the greatest, as will be explained below. This set-up is also useful in retrofitting sand filters which are typically set up to receive feed from the top and to backwash from below. For other membrane modules 10, installations or feed waters, the first inlet 30 may be used during permeation.

The deconcentration step commences when permeation stops and lasts for about 20 to 90 seconds, preferably 30 to 60 seconds. During the deconcentration step, scouring bubbles are produced at the aerator 14 and rise through the membrane modules 10. In addition one or both of the steps of backwashing and feed flushing are performed. To flush with feed water, feed enters the tank 12 through the first inlet 30 creating an excess of tank water 36 which rises upwards through the membrane modules 10. The rate of flow of feed water during feed flushing is typically between 0.5 and 2, preferably between 0.7 and 1.5, times the rate of flow of feed water during permeation. With either backwashing or feed flushing, the level of the tank water 36 rises, tank water 36 flows upwards through the membrane modules 10 and tank water 36 containing solids (then called retentate) flows out of the retentate outlet 22 to deconcentrate the tank water 36.

In some cases, the upwards velocity of the tank water 36 may create forces on the membranes that exceed their strength, particularly if strong feed flushing and back washing are performed simultaneously. In these cases, the rate of flow of feed water or backwash liquid or both can be reduced to reduce the upward velocity of the tank water 36. Alternatively, the flow of feed water can be turned off during backwashing and any feed flushing done while there is no backwashing and vice versa. For example, a deconcentration step may involve backwashing preferably with aeration but without feed flushing for a first part of the deconcentration step and feed flushing preferably with aeration but without backwashing for a second part of the deconcentration step. Further alternatively, deconcentration steps involving backwashing preferably with aeration but without feed flushing can be performed in some cycles and deconcentration steps involving feed flushing preferably with aeration but without backwashing can be used in other cycles. Other combinations of the above procedures might also be used.

Aeration is typically performed at the same time as the other steps to reduce the total time of the deconcentration step. Aeration may, however, begin several seconds (approximately the time required for a bubble to rise from the aerator 14 to the surface of the tank water 36) before backwashing or feed flushing. Such aeration in the absence of tank water 36 flow (because no space was left for downcomers) causes turbulence which help loosen some foulants and float some solids to near the top of the tank 12 before retentate starts flowing out the retentate outlet 20.

Aeration during the deconcentration step does not need to overcome suction to dislodge solids from the membranes and is provided at a superficial velocity (m³/h of air at standard conditions per m² of module cross-sectional area) between 25 m/h and 75 m/h. For many if not most feed waters, particularly those feed waters having low turbidity and solids concentrations less than about 500 mg/L, additional aeration is not required. Nevertheless, a smaller amount of aeration may be provided with difficult feed water during permeation to disperse solids from dead zones in a membrane module 10 and homogenize the tank water 36. For this purpose, aeration is provided at a superficial velocity less than 25 m/h or intermittently at the higher rates described above.

During the deconcentration step, the feed water or backwashing liquid introduced into the tank 12 creates a flow of tank water 36 upwards through the modules 10. The tank water 36 flowing through the membrane modules 10 helps remove solids loosened by the scouring bubbles from the membrane modules 10 and also directly acts on the surface of the membranes. The tank water 36 flows most rapidly near the top of the tank 12 which helps reduce preferential fouling of upper membranes when membrane modules 10 are stacked, for example to depths of 2 m or more. Some solids in the tank water 36 may have a settling velocity greater than the velocity of the upflow velocity and will settle. The volume of these solids is small and they may be removed from time to time by partially draining the tank 12 through a supplemental drain 38.

Based on a design permeate flux, the required flow of feed water during permeation can be calculated and delivered, typically by adjusting a feed pump or feed valve. The frequency and intensity of deconcentration events is then selected to achieve a desired loss in membrane permeability over time. If flux during permeation is kept below about 60 L/m²/h, preferably less than 40 L/m²/h, the inventors have found that surprising little fouling occurs and the periodic deconcentration events are usually sufficient. More surprisingly, the energy cost savings produced by operating at low flux and low aeration more than offsets the cost of filling the tank 12 with membrane modules 10. Despite the low flux (compared to a more typical flux of 50 to 100 L/m²/h), high tank velocities (flux of permeate in m³/h divided by tank horizontal cross sectional area in m²) are achieved which compare favourably with sand filtration. Further, resulting recovery rates are generally adequate for single stage filtration and are typically adequate for the first stage of two stage filtration (wherein the retentate is refiltered) even with aggressive deconcentration.

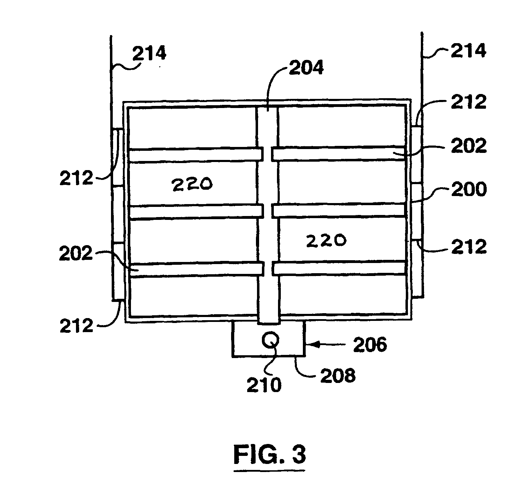

Figure 3 shows a plan view of a larger filtering reactor. A second tank 200 encloses several cassettes 220 each of which may contain a plurality of membrane modules. Open channels 202 are provided between adjacent cassettes 220 to receive tank water overflowing the cassettes 210 as described above. The channels 202 are sloped to drain towards a larger trough 204 which is in turn sloped to drain towards a second outlet 206. The second outlet 206 has an outlet box 208 to temporarily hold the discharged tank water before it flows into a drain pipe 210. As in the embodiment of figure 9, feed water enters the second tank 200 at a point below the cassettes 220, but several second inlets 212 are attached to an inlet header 214 to provide a distributed supply of feed.

## Claims

1. A process of filtering water, comprising the repetition of a filtration cycle having:
(a) a permeation step wherein
(i) feed water enters a tank; and
(ii) a similar volume of permeate is withdrawn from the tank by suction on an inner surface of submerged filtering membranes arranged in modules (10); and
(b) a deconcentration step wherein
(iii) scouring bubbles rise through the modules;
(iv) the membranes are backwashed with permeate, or a flow of feed water is provided from below the membranes, or both; in such a way that
(v) water containing solids flows upwards through the modules to exit the tank from a point above the modules.

2. A process according to claim 1, wherein the modules (10) cover most of the horizontal cross-sectional area of the tank.

3. A process according to claim 2, wherein the modules cover more than 90% of the horizontal cross-sectional area of the tank.

4. A process according to claim 3, wherein the modules cover substantially all of the horizontal cross-sectional area of the tank.

5. A process according to any previous claim, wherein the scouring bubbles begin to rise before the backwashing.

6. A process according to any previous claim, wherein the filtering membranes are hollow fibres oriented horizontally.

7. A process according to any previous claim, wherein feed water is provided from above the modules during permeation.

8. A process according to any previous claim, wherein feed water flows into the tank from below the modules during deconcentration.

9. A filtering reactor including:
(a) a tank (12) open to the atmosphere;
(b) one or more modules (10) of suction-driven filtering membranes in the tank for withdrawing a filtered permeate, the modules covering more than 90% of the horizontal cross-sectional area of the tank;
(c) an inlet to add feed water to the tank;
(d) a retentate outlet (22) to discharge water containing retained solids from the tank from above the one or more modules; and
(e) an aerator (14) below the one or more modules.

10. A reactor according to claim 9, in which the said inlet (30) enters the tank from below the one or modules.

11. A reactor according to claim 9 or 10, wherein the modules (10) cover substantially all of the horizontally cross-sectional area of the tank.

12. A reactor according to any of claims 9 to 11, wherein the retentate outlet incorporates an overflow or weir (24).

13. A reactor according to any of claims 9 to 12, wherein the filtering membranes are hollow fibres oriented horizontally.

14. A reactor according to any of claims 9 to 13, wherein the or each module is divided internally by impervious vertical plates.

## Patentansprüche

1. Ein Verfahren zum Filtern von Wasser, das die Wiederholung eines Filtrierzyklus mit folgenden Schritten aufweist:
a) einem Permeationsschritt, bei dem
i) Speisewasser in einen Tank gelangt; und
ii) ein ähnliches Volumen an Permeat aus dem Tank durch Ansaugen an einer Innenoberfläche eingetauchter Filterungsmembrane, die in Modulen (10) angeordnet sind, entnommen wird; und
b) einem Dekonzentrierschritt, bei dem
iii) Spülblasen durch die Module aufsteigen;
iv) die Membranen mit Permeat rückgespült werden oder ein Fluss von Speisewasser von unterhalb der Membranen bereitgestellt wird, oder beides, auf eine derartige Weise, dass
v) Wasser, das Feststoffe enthält, nach oben durch die Module fließt, um den Tank von einem Punkt oberhalb der Module zu verlassen.

2. Ein Verfahren gemäß Anspruch 1, bei dem die Module (10) einen Großteil der horizontalen Querschnittsfläche des Tanks bedecken.

3. Ein Verfahren gemäß Anspruch 2, bei dem die Module mehr als 90 % der horizontalen Querschnittsfläche des Tanks bedecken.

4. Ein Verfahren gemäß Anspruch 3, bei dem die Module im wesentlichen die gesamte horizontale Querschnittsfläche des Tanks bedecken.

5. Ein Verfahren gemäß einem der vorherigen Ansprüche, bei dem die Spülblasen vor der Rückspülung aufzusteigen beginnen.

6. Ein Verfahren gemäß einem der vorherigen Ansprüche, bei dem die Filterungsmembranen horizontal ausgerichtete Hohlfasern sind.

7. Ein Verfahren gemäß einem der vorherigen Ansprüche, bei dem Speisewasser während der Permeation von oberhalb der Module bereitgestellt wird.

8. Ein Verfahren gemäß einem der vorherigen Ansprüche, bei dem Speisewasser während der Dekonzentration von unterhalb der Module in den Tank fließt.

9. Ein Filterungsreaktor mit folgenden Merkmalen:
a) einem Tank (12), der gegenüber der Atmosphäre offen ist;
b) einem oder mehreren Modulen (10) ansaug-getriebener Filterungsmembranen in dem Tank zum Entnehmen eines gefilterten Permeats, wobei die Module mehr als 90 % der horizontalen Querschnittsfläche des Tanks bedecken;
c) einem Einlass zur Zugabe von Speisewasser in den Tank;
d) einem Retentat-Auslass (22) zum Ablassen von Wasser, das zurückgehaltene Feststoffe enthält, aus dem Tank von oberhalb des einen oder der mehreren Module; und
e) einer Belüftungsvorrichtung (14) unterhalb des einen oder der mehreren Module.

10. Ein Reaktor gemäß Anspruch 9, bei dem der Einlass (30) von unterhalb des einen oder der mehreren Module in den Tank gelangt.

11. Ein Reaktor gemäß Anspruch 9 oder 10, bei dem die Module (10) im wesentlichen die gesamte horizontale Querschnittsfläche des Tanks bedecken.

12. Ein Reaktor gemäß einem der Ansprüche 9 bis 11, bei dem der Retentat-Auslass einen Überlauf oder ein Wehr (24) beinhaltet.

13. Ein Reaktor gemäß einem der Ansprüche 9 bis 12, bei dem die Filterungsmembranen horizontal ausgerichtete Hohlfasern sind.

14. Ein Reaktor gemäß einem der Ansprüche 9 bis 13, bei dem das oder jedes Modul intern durch undurchlässige vertikale Platten unterteilt ist.

## Revendications

1. Procédé pour filtrer de l'eau, comprenant la répétition d'un cycle de filtration comprenant :
(a) une étape d'infiltration dans laquelle :
(i) l'eau d'alimentation pénètre dans un réservoir ; et
(ii) un volume similaire du perméat est retiré du réservoir par aspiration sur une surface interne de membranes de filtration submergées, agencées en modules (10) ; et
(b) une étape de déconcentration dans laquelle :
(iii) des bulles de lavage remontent par les modules ;
(iv) les membranes sont rincées avec le perméat, ou un écoulement d'eau d'alimentation est prévu à partir de sous les membranes, ou les d'eux ; de sorte que
(v) l'eau contenant des solides s'écoule vers le haut par les modules pour sortir du réservoir à partir d'un point situé au dessus des modules.

2. Procédé selon la revendication 1, dans lequel les modules (10) recouvrent presque la zone de section transversale horizontale du réservoir.

3. Procédé selon la revendication 2, dans lequel les modules couvrent plus de 90% de la zone de section transversale horizontale du réservoir.

4. Procédé selon la revendication 3, dans lequel les modules couvrent sensiblement toute la zone de section transversale horizontale du réservoir.

5. Procédé selon l'une quelconque des revendications précédentes, dans lequel les bulles de lavage commencent à remonter avant le rinçage.

6. Procédé selon l'une quelconque des revendications précédentes, dans lequel les membranes de filtration sont des fibres creuses orientées horizontalement.

7. Procédé selon l'une quelconque des revendications précédentes, dans lequel l'eau d'alimentation est fournie à partir du dessus des modules pendant l'infiltration.

8. Procédé selon l'une quelconque des revendications précédentes, dans lequel l'eau d'alimentation s'écoule dans le réservoir à partir du dessus des modules pendant la déconcentration.

9. Réacteur de filtration comprenant :
(a) un réservoir (12) ouvert à l'atmosphère ;
(b) un ou plusieurs modules (10) de membranes de filtration entraînées par aspiration dans le réservoir pour retirer un perméat filtré, les modules couvrant plus de 90% de la zone de section transversale horizontale du réservoir :
(c) une entrée pour ajouter de l'eau d'alimentation dans le réservoir ;
(d) une sortie de rétentat (22) pour évacuer l'eau contenant les solides retenus du réservoir à partir du dessus des un ou plusieurs modules ; et
(e) un aérateur (14) situé au dessous des un ou plusieurs modules.

10. Réacteur selon la revendication 9, dans lequel ladite entrée (30) pénètre dans le réservoir à partir de sous les un ou plusieurs modules.

11. Réacteur selon la revendication 9 ou 10, dans lequel les modules (10) couvrent sensiblement toute la zone de section transversale horizontale du réservoir.

12. Réacteur selon l'une quelconque des revendications 9 à 11, dans lequel la sortie de rétentat comprend un trop-plein ou déversoir (24).

13. Réacteur selon l'une quelconque des revendications 9 à 12, dans lequel les membranes de filtration sont des fibres creuses orientées horizontalement.

14. Réacteur selon l'une quelconque des revendications 9 à 13, dans lequel le ou chaque module est divisé de manière interne par des plaques verticales imperméables.
